# EUROPEAN PATENT APPLICATION

(11) **EP 2 611 167 A2**
(43) Date of publication of application: **03.07.2013**
(21) Application number: 12199739.9
(22) Date of filing: 28.12.2012
(51) Int. Cl.: H04N 13/00, H04N 13/04

(54) **Security display apparatus**

(30) Priority: 02.01.2012 KR 20120000059
(71) Applicant: Samsung Electronics Co., Ltd, Gyeonggi-do 443-742 (KR)
(72) Inventor: Park, Tae-soon, Gyeonggi-do (KR); Park, Seung-ho, Gyeonggi-do (KR)
(74) Representative: Brandon, Paul Laurence

(57) **Abstract**

A security display apparatus is provided including an image processor (120) which reverses a normal image to create a reverse image which is a negative of the normal image, and a display unit (100) which displays the normal image and the reverse image. The display apparatus further includes three-dimensional (3D) glasses (200) which filter the reverse image such that the reverse image is blocked from a user by the glasses and the normal image is transmitted to the user through the glasses.

## Description

### BACKGROUND

### 1. Field of the Invention

Apparatuses consistent with exemplary embodiments relate to security display apparatuses, and more particularly to security display apparatuses which provide a secured image using a display apparatus capable of realizing a three-dimensional image, and to a corresponding method.

### 2. Description of the Related Art

Generally, in the use of a display apparatus in a public place, people within a visible distance can see content displayed on a screen, bringing up the issue of invasion of privacy. Infringement of privacy is even more serious in display apparatuses used in public institutions for immigration inspections at airports or for an identity check.

In this respect, a display apparatus is required to have a secured display function.

One illustrative example of a display apparatus having a secured display function is an apparatus provided with an encoding/decoding function used to present a secured image. The display apparatus includes a display outputting an encoded image and exclusive glasses decoding the encoded image into a visible image.

The display apparatus with this configuration enables a user wearing the exclusive glasses to watch the secured image output from the display but presents an unrecognizable image to a user with the naked eye, thereby maintaining security.

However, such a display apparatus requires an encoding function embedded in the display and needs the exclusive glasses to have a decoding function, thus complicating the configuration and causing an increase in product costs.

Further, as one illustrative example of a liquid crystal display (LCD) having a secured display function, there is a display apparatus having a structure in which a polarizing plate serving as an analyzer is omitted from a pair of polarizing plates disposed to face each other with an LCD panel interposed therebetween.

In this case, when watching an image displayed in the display apparatus, a user not wearing polarizing glasses sees a white screen but only a user wearing polarizing glasses serving as an analyzer can watch effective images, thereby maintaining security.

However, since the display apparatus does not include a polarizing plate for an analyzer, which is an essential component, a user inconveniently must wear the polarizing glasses even to watch images when security is not needed. Further, since the display apparatus involves a modification to a basic structure, such a configuration is not applied to display apparatuses already being used. In addition, the display apparatus allows a user wearing glasses with mere polarizing properties, such as sunglasses, to see content, thus providing lax security.

### SUMMARY

Accordingly, one or more exemplary embodiments provide a security display apparatus which is constructed to provide a secured image viewable only by a user wearing three-dimensional (3D) glasses with predetermined settings using a display apparatus capable of realizing a 3D image.

A security display apparatus according to an aspect of an exemplary embodiment permits a user to view a secured image using general 3D glasses without involving a change to essential components or using exclusive glasses with a decoding function. Accordingly, the security display apparatus may have a compact structure and reduced manufacturing costs as compared with a conventional security display apparatus.

### BRIEF DESCRIPTION OF THE DRAWINGS

The above and/or other exemplary aspects and advantages will become apparent and more readily appreciated from the following description of exemplary embodiments, taken in conjunction with the accompanying drawings, in which:

FIG. 1 is a perspective view schematically illustrating a security display apparatus according to an exemplary embodiment.

FIG. 2 is a block diagram of the display apparatus of FIG. 1.

FIG. 3 is a flowchart illustrating a process of the security display apparatus realizing a secured image.

FIGs. 4A to 4C illustrate a process of realizing a secured image by constructing a normal image and a reverse image in a side-by-side mode among 3D display modes.

### DETAILED DESCRIPTION OF EXEMPLARY EMBODIMENTS

Below, exemplary embodiments will be described in detail with reference to accompanying drawings so as to be easily realized by a person having ordinary knowledge in the art. One of skill in the art would understand that exemplary embodiments may be embodied in various forms without being limited to the embodiments specifically set forth herein. Descriptions of well-known parts are omitted for clarity and conciseness, and like reference numerals refer to like elements throughout.

A 3D image generation unit is arranged to display a left-eye image and a right-eye image that is the reverse or inverse of the left-eye image so that wearing normally configured 3D glasses a user just sees a blank image, typically a grey screen. A user with adapted 3D glasses that just view the left-eye image sees the displayed image.

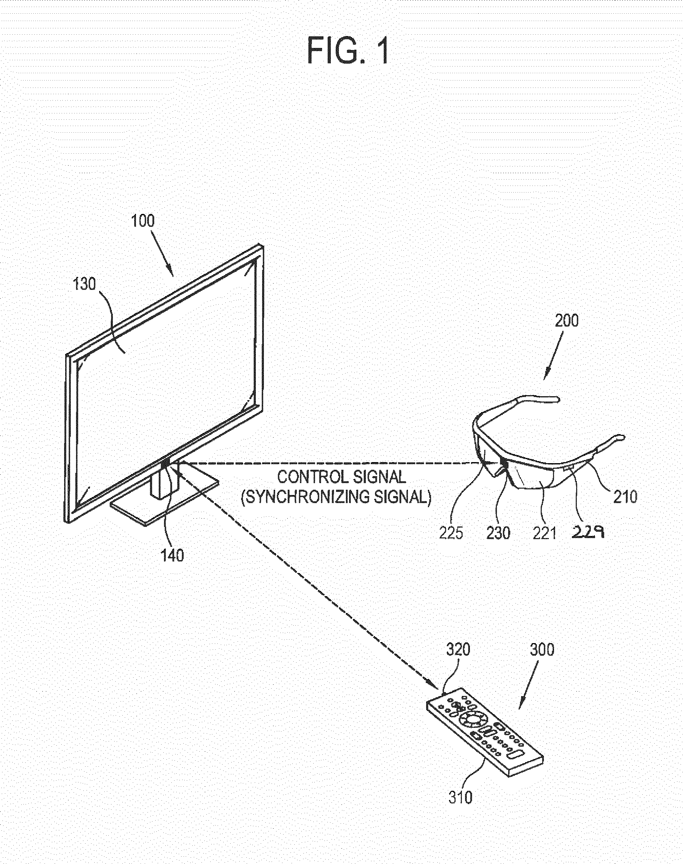

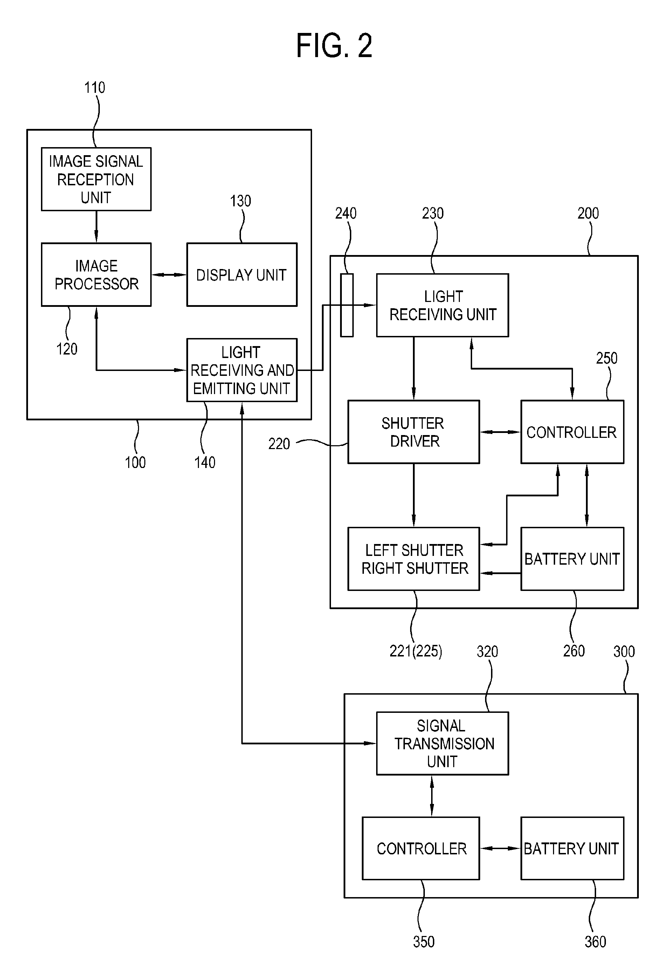

FIG. 1 is a perspective view schematically illustrating a security display apparatus according to an exemplary embodiment, and FIG. 2 is a block diagram of the display apparatus of FIG. 1.

Referring to FIGs. 1 and 2, the security display apparatus according to the present embodiment includes a display 100, capable of realizing a three-dimensional (3D) image, and 3D glasses 200. In addition, the display apparatus may further include a wireless control device 300.

The present embodiment is described with respect to a display apparatus that realizes a 3D image using active shutter glasses as an illustrative example. In this case, shutter glasses 200 are provided as the 3D glasses.

The display 100 displays a 3D image including a left-eye image and a right-eye image. The display 100 displays left-eye and right-eye images in different spatial frames, and a user wearing the shutter glasses 200 can visually recognize separate images as 3D images by a left shutter 221 and a right shutter 225 opening and closing.

The display 100 includes an image signal reception unit 110 receiving an image signal from an image source, an image processor 120 processing a received image signal, a display unit 130 displaying an image, and a light receiving and emitting unit 140 receiving and emitting light for a control signal from and to a peripheral device.

The display 100 may be configured as a portable device which receives a 3D image signal from an image source and displays the signal, e.g., a television, a monitor, and a mobile phone.

The image processor 120 reverses a normal image input to realize a secured image to generate a reverse image. The reverse image may be generated by any one of an image board, a traffic control board (T-con board) and a logic board, which constitute the image processor 120, reversing the normal image with respect to a contrast ratio. Here, the input normal image is a two-dimensional (2D) image which is not divided into left-eye and right-eye images, different from a 3D image.

Further, the image processor 120 outputs one of a left-eye image and a right-eye image as a normal image and outputs the other thereof as a reverse image. For example, the image processor 120 outputs a left-eye image as the normal image, and a right-eye image as the reverse image.

The display unit 130 displays an image based on an image signal processed by the image processor 120. The display unit 130 may include a liquid crystal display (LCD) panel including a liquid crystal layer, an organic light emitting diode (OLED) display including a light emitting layer of an organic material and a plasma display panel (PDP), and a panel driver driving these panels.

The light receiving and emitting unit 140 generates light for a synchronizing signal and irradiates the light to the shutter glasses 200 so that the left shutter 221 and the right shutter 225 of the shutter glasses 200 open and close in synchronization with an image displayed on the display unit 130. Also, the light receiving and emitting unit 140 receives light for a control signal from the wireless control device 300.

The wireless control device 300 includes a device body 310 and a signal transmission unit 320 installed in the device body 310 for transmitting a control signal to the light receiving and emitting unit 140 of the display 100. Further, the wireless control device 300 includes a controller 350 controlling the signal transmission unit 320 and a battery unit 360 supplying electric power to the wireless control device 300. Here, the signal transmission unit 320 may include an infrared transmitter transmitting infrared light to perform infrared communication with the light receiving and emitting unit 140.

The shutter glasses 200 include a glasses body 210 and the left and right shutters 221 and 225 installed in the glasses body 210 and opening and closing in synchronization with left-eye and right-eye images displayed on the display 100. Further, the shutter glasses 200 may further include a mode setting unit 229 to set an image among left-eye and right-eye images for each of the left shutter 221 and the right shutter 225 to synchronize with to open and close.

Generally, to watch 3D images, the mode setting unit 229 sets the left shutter 221 to synchronize with a left-eye image and the right shutter 225 to synchronize with a right-eye image. In this case, the left shutter 221 is shut when a right-eye image is displayed on the display 100, and it transmits an image when a left-eye image is displayed. That is, the left shutter 221 blocks a right-eye image and transmits a left-eye image. The right shutter 225 operates in the other way. That is, the right shutter 225 blocks a left-eye image and transmits a right-eye image.

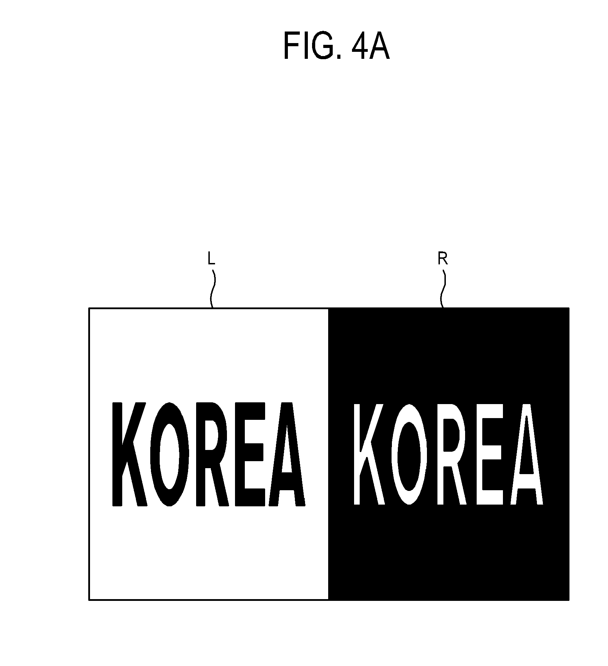

Further, in order to realize a secured display, the shutter glasses 200 as the 3D glasses filter a reverse image to view a normal image among images displayed on the display unit 130. To this end, the shutter glasses 200 are set by the mode setting unit 229 so that both the left shutter 221 and the right shutter 225 transmit only an image providing a normal image (left-eye image in FIG. 4A). That is, both the left shutter 221 and the right shutter 225 transmit an image when a left-eye image (normal image) is displayed on the display 100, but they block an image when a right-eye image (reverse image) is displayed.

The shutter glasses 200 include a light receiving unit 230, an optical element 240, and a controller 250 controlling these components, which are installed in the glasses body 210, in addition to the glasses body 210 and the left and right shutters 221 and 225. Moreover, the shutter glasses 200 may include a shutter driver 220 driving the left and right shutters 221 and 225 and a battery unit 260.

The light receiving unit 230 receives light for a control signal irradiated from the display 100, converts the light into a control signal, and outputs the signal to the shutter driver 220. Here, the control signal may be a synchronizing signal for controlling the left and right shutters 221 and 225. The light receiving unit 230 includes a light receiving element 231 receiving incident light and a light collecting lens 235 collecting light entering the light receiving element 231. Here, the light receiving element 231 may include an infrared receiver receiving infrared light in a range of 790 to 890 nm.

The shutter driver 220 performs auto gain control on an input synchronizing signal to drive the left shutter 221 and the right shutter 225. The shutter driver 220 divides the synchronizing signal, delays divided synchronizing signals, or changes a phase of a signal. The left shutter 221 and the right shutter 225 may be provided as liquid crystal shutter glasses and open and close by drive of the shutter driver 220.

Hereinafter, a process of the security display apparatus realizing a secured image is described with reference to the drawings.

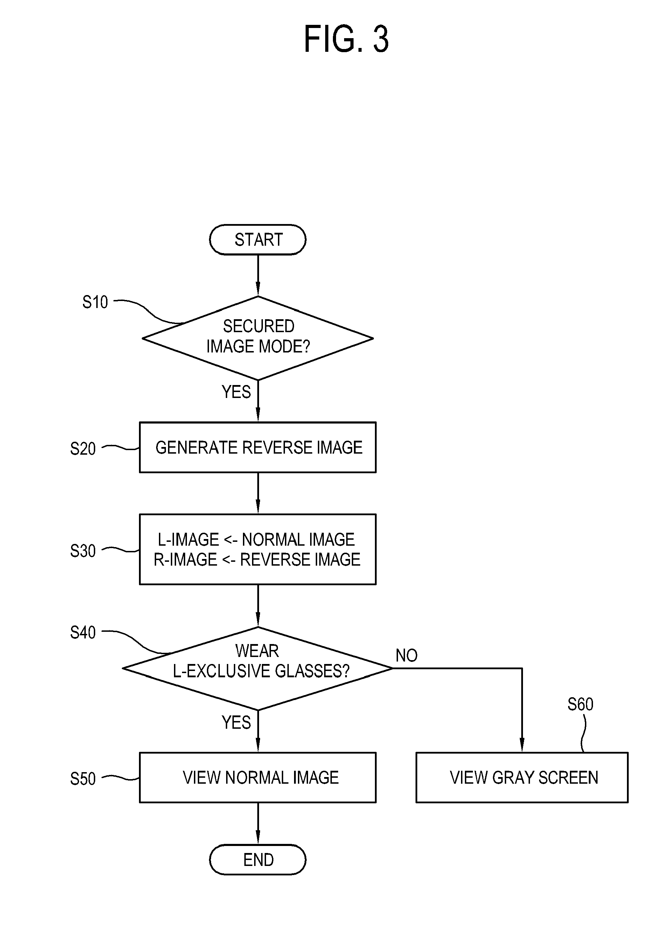

Referring to FIG. 3, it is determined whether a secured image mode is realized in the display apparatus capable of realizing a 3D image (S10), and then the image processor 120 generates a reverse image if realizing the secured image mode (S20). Then, the image processor 120 forms a 2D normal image input to the display 100 and the reverse image generated by the image processor 120 as a left-eye image (L image) and a right-eye image (R image), respectively (S30).

Here, the normal image and the reverse image as the left-eye image and the right-eye image, respectively, may be configured in any one mode of 3D display modes. That is, the normal image and the reverse image may be realized as the left-eye image and the right-eye image in any one mode among a side-by-side mode, a top-and-bottom mode, a checker board mode, and a sequential frame mode.

FIGs. 4A to 4C illustrate a process of realizing a secured image by constructing a normal image and a reverse image in a side-by-side mode among 3D display modes.

FIG. 4A illustrates an example of an image realized in a side-by-side mode in which the normal image forms a left-eye image and the reverse image forms a right-eye image. When forming a screen in this manner and then driving the display apparatus in a 3D image mode, the normal image and the reverse image expand in a width direction of the display apparatus and are alternately displayed in a time-shared mode.

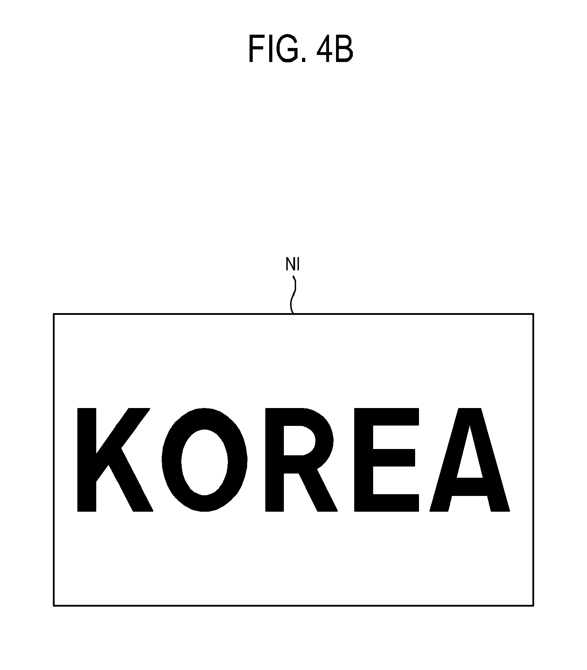

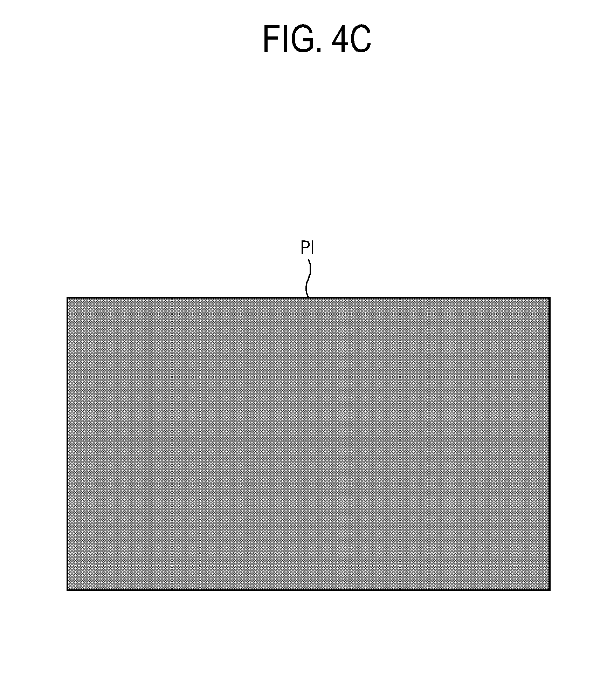

In this case, a user wearing 3D glasses with settings for both the left shutter 221 and the right shutter 255 to transmit a left-eye image (L-exclusive) can see the left-eye image N1 as shown in FIG. 4B, thus watching a secured image normally. However, a user not wearing the exclusive glasses or a user wearing 3D glasses with settings for viewing a 3D image sees a gray image P1 formed by combination of the normal image and the reverse image as shown in FIG. 4C, thereby preventing the secured image from being disclosed.

That is, referring to FIG. 3, depending on wearing L-exclusive glasses (S40), a user wearing the L-exclusive glasses can watch the normal image (S50), whereas a user not wearing the L-exclusive glasses can watch only a grey screen (S60).

Although the security display apparatus described with reference to FIGs. 1 and 2 has been described with the shutter glasses including the mode setting unit 229 as 3D glasses, various changes and modifications of 3D glasses may be provided, without being particularly limited.

For example, shutter glasses as 3D glasses may include a glasses body and left and right shutters installed in the glasses body and opening and closing in synchronization with an image corresponding to a normal image displayed on the display among the left-eye and right-eye images. That is, the shutter glasses may be configured in a structure in which the left and right shutters transmit a normal image only without use of a mode setting unit.

Further, the security display apparatus may include polarizing glasses as 3D glasses. In this case, the display unit further includes a polarizing filter allowing the left-eye image and the right-eye image to have different polarizing properties. Here, the polarizing glasses transmit a certain polarized image corresponding to a normal image displayed on the display among the left-eye image and the right-eye image.

As described above, the security display apparatus according to the present embodiment displays a normal image as one of left-eye and right-eye images and a reverse image as the other thereof, so that only a user wearing 3D glasses enabling both eyes to satisfy requirements for seeing a normal image is allowed to watch a secured image.

Although a few exemplary embodiments have been shown and described, it will be appreciated by those skilled in the art that changes may be made in these exemplary embodiments without departing from the principles and spirit of the inventive concept, the scope of which is defined in the appended claims and their equivalents.

## Claims

1. A security display apparatus comprising:
a display (100) comprising an image processor (120) which reverses a normal image to generate a reverse image, which outputs the normal image as one of a left-eye image and a right-eye image, and outputs the reverse image as the other of the left-eye image and the right-eye image, and a display unit which displays the left-eye image and the right-eye image output from the image processor; and
glasses (200) which filter the reverse image from a user such that the user views the normal image.

2. The security display apparatus of claim 1, wherein the normal image comprises a two-dimensional (2D) image.

3. The security display apparatus of claim 2, wherein the image processor (120) outputs the normal image and the reverse image in one of a side-by-side 3D display mode , a top-and-bottom 3D display mode, a checker board 3D display mode, and a sequential frame 3D display mode.

4. The security display apparatus of claim 1, wherein the glasses (200) comprise a glasses body (210), a right shutter (225), and a left shutter (221), wherein the right shutter and the left shutter each open and close in synchronization with the display of the left-eye image and the right-eye image.

5. The security display apparatus of claim 1, wherein the glasses (200) comprise a glasses body (210), a right shutter (225), a left shutter (221), and a mode setting unit (229) which sets one of the left-eye image and the right-eye image to correspond to each of the left shutter and the right shutter.

6. The security display apparatus of claim 1, wherein the display unit (100) further comprises a polarizing filter causing a polarization of the left-eye image to be different from a polarization of the right-eye image, and wherein the glasses comprise which transmit a polarized image corresponding to the normal image displayed on the display and which block a polarized image corresponding to the reverse image.

7. A method of displaying a secure image comprising:
displaying a normal image and a reverse image, wherein the reverse image is a negative of the normal image;
controlling a glasses unit to transmit the normal image to a user and to block the reverse image from the user.
